# FASCICULE DE BREVET EUROPEEN

(11) **EP 3 408 590 B1**
(45) Date de publication et mention de la délivrance du brevet: **22.01.2020**
(21) Numéro de dépôt: 17706294.0
(22) Date de dépôt: 27.01.2017
(51) Int. Cl.: F23J 15/06

(54) **DISPOSITIF DE RECIRCULATION DE GAZ**
GASRÜCKFÜHRUNGSVORRICHTUNG
GAS RECIRCULATION DEVICE

(30) Priorité: 29.01.2016 FR 1650716
(43) Date de publication de la demande: 05.12.2018
(73) Titulaire: Haffner Energy, 51300 Vitry Le Francois (FR)
(72) Inventeur: FERNANDEZ DE GRADO, Alain, 51300 Les Rivières Henruel (FR); HAFFNER, Philippe, 51300 Vitry le François (FR)
(74) Mandataire: Oudin, Stéphane
(86) Numéro de dépôt international: PCT/FR2017/050194
(87) Numéro de publication internationale: WO 2017/129920

(56) Documents cités:
- DE-A1- 3 136 480
- US-A- 3 880 622
- US-A- 4 300 920

## Description

### Domaine de l'invention

La présente invention entre dans le domaine de la production d'énergie par combustion ou gazéification de matière organique, cette matière pouvant être constituée de biomasse, de déchets organiques ou de matière fossile.

L'invention concerne particulièrement un dispositif de recirculation des gaz du procédé de combustion ou gazéification mais également le procédé de recirculation des gaz émis utilisant ledit dispositif.

### Etat de la technique

Lors d'une combustion de matière organique en chaudière, par exemple pour une production d'énergie de chauffage ou pour une production de vapeur d'eau dans un process de cogénération d'énergie, des fumées sont émises à l'issue de la transformation de la matière première. Ces fumées ne sont pas évacuées en l'état dans l'environnement pour des raisons économiques, sanitaires et de protection de l'environnement.

En conséquence, les procédés de chaufferie comportent habituellement des dispositifs de filtration des fumées, de traitement chimique, par exemple, par ajout d'urée pour assurer un traitement de captation des oxydes d'azote (Nox) et de récupération d'énergie avec des échangeurs de chaleur en aval de la chaudière. Ces dispositifs représentent une perte de charge en pression sur le circuit des fumées, qui est compensée par l'installation d'un ventilateur de tirage placé en fin de réseau afin d'assurer le débit des fumées depuis la chaudière jusqu'à la cheminée d'évacuation.

Ce ventilateur de tirage placé en aval des équipements de filtration ou de traitement chimique ou de récupération d'énergie reçoit des fumées filtrées et refroidies et est donc peu soumis aux risques d'encrassement, de condensation de liquide ou de surchauffe.

Un défaut de cette solution de tirage final est que l'évolution des pressions et des débits dans le circuit des fumées entre la chaudière et la cheminée est ainsi imposée par la succession des équipements et des pertes de charge associées et ne peut pas être ajustée ponctuellement durant l'utilisation de l'installation.

De plus, la performance du ventilateur de tirage est limitée par la faible pression disponible en amont des pales du ventilateur, la limite étant d'atteindre le vide à l'aspiration du ventilateur.

D'autre part, si l'on souhaite mettre en place un procédé dans lequel des équipements fonctionnent de façon plus complexe qu'une simple succession d'étapes en série, par exemple si les rejets d'un premier étage alimentent l'entrée d'un deuxième étage parallèle qui ensuite renvoie en arrière les gaz à l'entrée du premier étage, alors les caractéristiques de débits et de pressions du gaz doivent permettre des circulations plus complexes, ce que ne permet pas la solution traditionnelle de ventilateur de tirage final.

Une solution serait de placer un dispositif de pressurisation en ligne afin de remonter la pression du fluide, comme par exemple avec un ventilateur. Mais alors il faut traiter l'ensemble du flux de gaz ce qui impose un dimensionnement coûteux de l'installation. Il faut aussi supporter les risques d'encrassement ou de surchauffe des équipements placés en ligne.

Le risque de surchauffe ou d'endommagement par des escarbilles incandescentes des équipements de traitement des fumées est particulièrement sensible sur certaines technologies, comme par exemple pour les filtres à manches qui peuvent même prendre feu.

Il est alors souhaitable de disposer d'un dispositif qui permette de contrôler le débit et la pression dans chaque équipement du process sans se placer dans des conditions de température inadaptées à l'équipement concerné.

D'autre part, lors d'une production de gaz synthétiques (syngaz) par gazéification de matière première organique, la même problématique se pose, car les syngaz générés doivent aussi subir des étapes de filtration, récupération d'énergie,... qui utilisent des équipements sensibles aux hautes températures. Par exemple, un gaz synthétique produit à une température de 1200°C ne peut pas alimenter directement un traitement d'enlèvement d'oxydes d'azote (Nox) SNCR dont la plage de température idéale se situe entre 870°C et 980°C. Intercaler un échangeur de chaleur afin de descendre de 1200°C à 950°C impose que cet échangeur soit constitué d'un matériau réfractaire très coûteux.

Le document DE 31 36 480 A1 divulgue un dispositif de circulation de gaz comprenant une canalisation principale, dite de flux principal de gaz, comprenant un moyen de mélange délimitant la partie aval et la partie amont de ladite canalisation de flux principal de gaz, et un circuit de dérivation, dit de flux dérivé, comprenant un moyen d'échange de chaleur, ledit moyen de mélange comprenant une première entrée reliée à la partie amont de ladite canalisation de flux principal de gaz, une deuxième entrée reliée à une extrémité du circuit de dérivation et une sortie reliée à la partie aval de ladite canalisation de flux principal de gaz, l'autre extrémité dudit circuit de dérivation étant reliée à ladite canalisation de flux principal de gaz au niveau d'un point dit premier point de dérivation, ledit circuit de dérivation comprenant d'une part un circuit primaire relié à ladite canalisation de flux principal de gaz au niveau dudit premier point de dérivation et au niveau dudit moyen de mélange, et d'autre part un circuit secondaire comprenant ledit moyen d'échange de chaleur et dont une des extrémités, dite extrémité aval, est reliée audit circuit primaire via un second moyen de mélange, et dont l'autre extrémité, dite extrémité amont, est reliée audit circuit primaire en un second point de dérivation placé sur ledit circuit primaire et ledit circuit secondaire comprenant en outre un moyen de pressurisation. Le circuit primaire comprend aussi un moyen d'épuration.

Le document US 3 880 622 A divulgue un dispositif de recirculation des gaz de combustion avec un échangeur de chaleur et un moyen de pressurisation.

Enfin, de nombreuses applications, par exemple l'incinération de déchets, ne permet pas l'utilisation d'échangeurs thermiques à des températures dépassant 600°C à 650°C, ce qui implique un refroidissement important des gaz de combustion. Ce refroidissement est généralement opéré par la recirculation de fumées refroidies causant ainsi une forte augmentation des débits de fumée.

### Description de l'invention

La présente invention a pour but de pallier les inconvénients de l'état de la technique en proposant un dispositif et un procédé de régulation de température sur les flux de gaz et de fumées issus des opérations de combustion et/ou gazéification de matière première organique.

Ainsi, la présente invention concerne notamment un dispositif de recirculation de gaz comprenant une canalisation principale, dite de flux principal de gaz, comprenant un moyen de mélange délimitant la partie aval et la partie amont de ladite canalisation de flux principal de gaz, et un circuit de dérivation, dit de flux dérivé, comprenant un moyen d'échange de chaleur, remarquable en ce que ledit moyen de mélange comprend une première entrée reliée à la partie amont de ladite canalisation de flux principal de gaz, une deuxième entrée reliée à une extrémité du circuit de dérivation et une sortie reliée à la partie aval de ladite canalisation de flux principal de gaz et en ce que l'autre extrémité dudit circuit de dérivation est reliée à la partie aval de ladite canalisation de flux principal de gaz au niveau d'un point dit premier point de dérivation.

Dans le cadre de la présente invention, le terme « relié » entend signifier qu'il existe un passage d'un fluide entre les éléments reliés entre eux. Ladite liaison peut être notamment réalisée via une canalisation. Le passage de fluide peut être total ou partiel. Par exemple, le passage est préférentiellement total entre le circuit de dérivation et le moyen de mélange. Par contre, le passage de fluide n'est que partiel entre la canalisation de flux principal de gaz et le circuit de dérivation au niveau du point de dérivation, une partie du flux poursuivant son trajet dans la canalisation de flux principal de gaz en aval du point de dérivation.

Selon un mode de réalisation préféré de l'invention, ledit dispositif comprend en outre un moyen anti-retour apte à empêcher le passage du gaz du circuit de dérivation vers la partie amont de ladite canalisation de flux principal de gaz, le moyen de mélange étant un Venturi.

Selon un mode de réalisation encore plus préféré de l'invention, l'entrée principale dudit Venturi est reliée à la partie amont de ladite canalisation de flux principal de gaz et l'aspiration dudit Venturi est reliée à l'extrémité aval dudit circuit de dérivation.

Selon l'invention, le circuit de dérivation comprend en outre un moyen de pressurisation. Selon un mode de réalisation encore plus préféré, ledit moyen de mélange est un Venturi dont l'entrée principale est reliée à l'extrémité aval du circuit de dérivation et l'aspiration dudit Venturi est reliée à la partie amont de ladite canalisation de flux principal de gaz.

Selon l'invention, le circuit de dérivation comprend en outre un moyen d'épuration.

Selon un mode de réalisation encore plus préféré de l'invention, le moyen d'épuration est installé en amont du moyen de pressurisation.

Selon l'invention, ledit circuit de dérivation comprend, d'une part, un circuit primaire relié à ladite canalisation de flux principal de gaz au niveau dudit premier point de dérivation et au niveau dudit moyen de mélange et, d'autre part, un circuit secondaire comprenant ledit moyen d'échange de chaleur dont une des extrémités, dite extrémité aval, est reliée audit circuit primaire via un second moyen de mélange, et dont l'autre extrémité, dite extrémité amont, est reliée audit circuit primaire en un second point de dérivation placé en aval dudit second moyen de mélange sur ledit circuit primaire.

Selon l'invention, ledit circuit secondaire comprend en outre ledit moyen de pressurisation et/ou ledit moyen d'épuration.

Dans le cadre de la présente invention, le terme « haute température » fait référence à une température supérieure à 100°C, préférentiellement à 300°C et encore plus préférentiellement supérieure à 500°C.

L'invention concerne également un procédé de recirculation de gaz utilisant les dispositifs inventifs.

### Avantages de l'invention

L'avantage de l'invention est que les gaz du procédé peuvent être utilement prélevés, refroidis et réinjectés dans une branche parallèle du flux principal, en amont des équipements sensibles à de trop fortes températures, tout en contrôlant localement leur débit et leur pression, indépendamment du débit et de la dépression appliquée par le ventilateur de tirage final.

Un autre avantage est que les gaz peuvent être épurés et traités durant cette opération de recirculation ce qui protège les équipements du procédé des risques d'encrassement et/ou de surchauffe et/ou de corrosion et/ou d'abrasion.

Un autre avantage est qu'il est possible de recirculer un débit partiel des gaz, ce qui minimise la taille de l'installation. La pression finale recherchée est obtenue en pressurisant fortement un petit débit plutôt qu'en pressurisant faiblement un grand débit, ce qui représente un moindre coût.

D'autres avantages et caractéristiques de l'invention sont décrits ci-après selon des solutions possibles de réalisation de l'invention.

Les descriptions font référence aux figures suivantes en annexe:
- la figure 1 représente schématiquement le principe de fonctionnement.
- la figure 2 représente schématiquement le principe de fonctionnement du dispositif selon l'invention.
- la figure 3 représente schématiquement une variante.
- la figure 4 représente une autre variante du dispositif selon l'invention.

### Exposé d'un mode de réalisation

La présente invention concerne un dispositif de recirculation de gaz de process qui permet notamment d'augmenter la pression du flux de gaz sans nécessiter l'installation d'un ventilateur sur le flux principal, par exemple pour une application sur un procédé de gazéification.

L'invention permet aussi de limiter la puissance des ventilateurs d'air primaire, secondaire, et de recirculation des fumées pour les installations de combustion et d'incinération.

L'invention permet aussi de refroidir un flux de gaz sans exposer le moyen de refroidissement, comme par exemple un échangeur de chaleur, à la température la plus haute à laquelle se trouve le flux de gaz en amont.

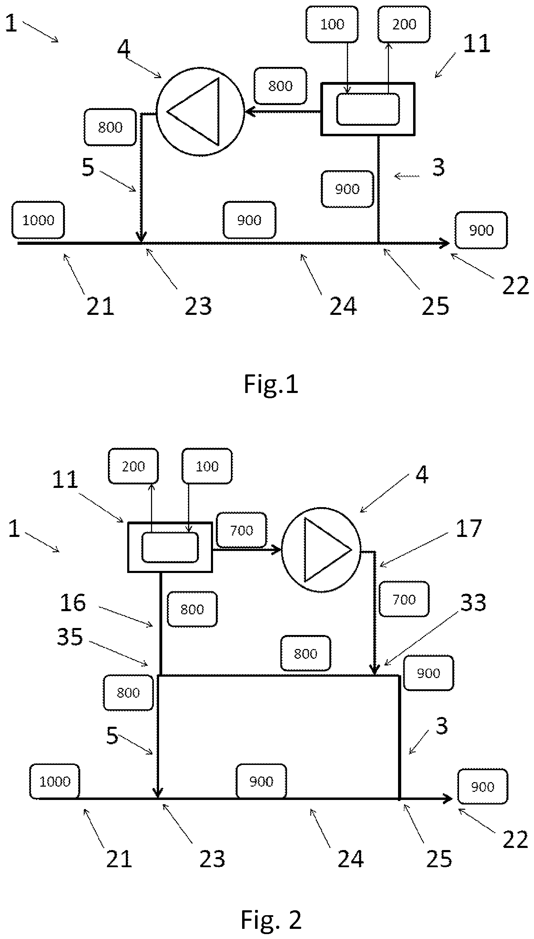

Ainsi, tel que représenté en figure 1, les nombres encadrés, de valeur 100 à 1000, représentent la température du gaz aux emplacements où les nombres sont placés. La valeur de la température peut être lue comme exprimée en °C ou comme une indication relative de température. Un flux de gaz amont 21 est séparé en deux flux avant de redevenir un flux principal aval 22. Cette séparation est faite à contre-courant, c'est-à-dire que lors de sa circulation le flux amont 21 reçoit d'abord en mélange un flux de retour 5 en un point de mélange 23. Le flux devient alors un flux mélangé 24 qui est ensuite séparé en un point de dérivation 25 en un flux aval 22 et un flux dérivé 3. Le flux dérivé 3 est recirculé en amont comme flux de retour 5 qui est remélangé avec le flux amont 21 par le point de remélange 23. Selon une variante avantageuse, cette recirculation est facilitée par l'utilisation d'un moyen de pressurisation 4, tel qu'un ventilateur, compresseur, pompe,... Un échangeur de chaleur 11 est installé entre le flux dérivé 3 et le flux de retour 5. Ainsi, si le flux amont 21 a une température de valeur 1000 et que l'échangeur 11 permet de prélever une quantité de chaleur équivalente à un refroidissement de valeur 100 en faisant circuler un fluide caloporteur qui rentre par exemple à une température de valeur 100 pour chauffer à une température de valeur 200, alors le retour des flux cause une baisse de température de valeur 100, par le mélange au point 23 du flux de retour 5 ayant une température de valeur 800 avec le flux amont 21 ayant une température de valeur 1000. Grâce à l'invention, l'échangeur 11 travaille avec un fluide ayant une température de valeur 900, alors que s'il était placé sur le flux principal entre l'amont 21 et l'aval 22 il travaillerait sur un fluide de température 1000. Il est donc moins sollicité.

La valeur 900 peut être descendue à 800 ou encore moins si le débit dérivé 3 est augmenté ou si la puissance du prélèvement de chaleur par l'échangeur 11 est accrue.

Ces valeurs sont simplement illustratives car elles supposent que les écarts de température se compensent et que les débits traités et les caractéristiques thermiques (conductivité,...) sont les mêmes. Si les conditions ne sont pas les mêmes, les valeurs sont modifiées mais le principe et la direction des échanges de chaleur sont les mêmes.

Selon l'invention, tel que représentée en figure 2, un second étage est installé. Le flux dérivé 3 est toujours recirculé vers le flux de retour 5 mais une partie de cette recirculation est elle-même séparée en un autre flux dérivé 16 à partir d'un point de dérivation 35, pour ensuite traverser un échangeur de chaleur 11 et un moyen de pressurisation 4 avant de devenir un flux de retour 17 qui est mélangé en un point de mélange 33 avec le flux dérivé initial 3.

Ainsi les valeurs des températures subissent une seconde baisse grâce à ce second étage. Les valeurs indiquées sur la figure 2 permettent de comprendre l'effet des 2 mélanges alors que l'échangeur de chaleur 11 est traversé par un flux de température de valeur 800 et non plus 900 selon la figure 1.

A l'aval le flux n'a toujours perdu que 100 d'écart de température, mais l'échangeur a pu travailler sur un flux moins chaud, ce qui permet de le concevoir moins coûteux et plus performant.

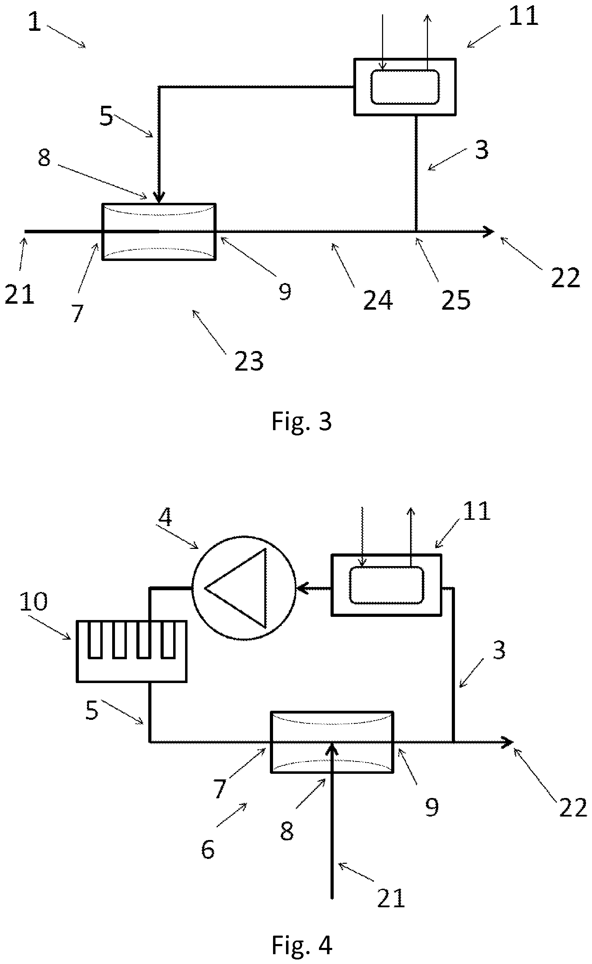

Selon une variante, comme indiqué en figure 4, la circulation en contre-courant du flux n'est pas assistée par la présence d'un moyen de pressurisation 4 et repose sur la présence d'un moyen de mélange 23 de type Venturi. L'énergie de mélange est apportée par la pression du flux amont 21 qui pénètre dans la branche principale du Venturi alors que le flux de retour 5 est aspiré dans le Venturi et mélangé avec le flux amont 21. Les flux mélangés sortent du Venturi en tant que flux 24.

Selon l'invention, un moyen de pressurisation 4 est employé afin de garantir la circulation des flux. Alors il est important que le gaz introduit par le retour 5 ne reparte pas en amont vers la chaudière ou toute autre partie du procédé.

Si le circuit de gaz en amont de l'invention est fermé, le gaz pressurisé par le dispositif de pressurisation 4 ne peut remonter en amont ce qui convient au bon fonctionnement de l'invention. Le point de mélange 23 peut alors être constitué d'une simple canalisation à 3 branches, par exemple en forme de Y. Le retour 5 et l'amont 21 sont raccordés à 2 branches du Y et la 3eme branche qui transporte le mélange est raccordée au flux mélangé 24, tel qu'indiqué en figure 1 et 2. Le point de mélange 23 peut aussi être une vanne 3 voies motorisée dont les débits de mélange sont réglables.

Par contre, comme indiqué en figure 4, si le circuit de gaz en amont est ouvert à l'atmosphère ou non totalement fermé de manière étanche, afin d'éviter un retour de gaz vers l'amont il est avantageux d'utiliser un mélangeur à effet Venturi comme moyen de mélange spécifique 6 qui est placé au point de remélange 23, dont l'entrée principale 7 est connectée au retour 5 et dont l'aspiration 8 est connectée à l'amont 21. Ainsi le gaz à la sortie 9 du moyen de mélange 6 a une pression supérieure à la pression du gaz amont et est bien envoyé vers l'aval 22.

Tout autre moyen de mélange 6 permettant de transmettre la surpression au gaz sans permettre l'écoulement inverse vers l'amont est applicable. L'invention concerne l'implantation d'un ou plusieurs moyens de traitement des gaz sur le flux dérivé 3 ou sur le flux de retour 5.

Un moyen d'épuration de gaz 10 tel un filtre à manches est placé, qui peut être placé en amont ou en aval du moyen de pressurisation 4, comme indiqué sur la figure 4, ou bien dans les deux positions avec 2 équipements différents. Ainsi, ce moyen d'épuration protège le moyen de mélange 6 du risque de dépôt et d'encrassement car les particules en suspension dans les gaz sont éliminées à temps.

S'il est placé en amont du moyen de pressurisation 4, il protège alors par la même occasion ce moyen de pressurisation 4 contre un risque d'encrassement, notamment les ailettes d'un ventilateur.

De plus, la perte de charge en pression due au passage dans le moyen d'épuration de gaz 10 est compensée par l'action du moyen de pressurisation 4, on est donc assuré du bon fonctionnement de l'installation.

Selon une variante, le moyen d'échange de chaleur 11 peut inversement servir à apporter de l'énergie et faire monter en température le gaz recirculé. Cela permet de réduire les risques de condensation de vapeur dans les circuits. La maîtrise des pressions grâce au moyen de pressurisation 4 garantit un bon fonctionnement de l'installation.

L'invention concerne aussi la combinaison de moyens d'épuration et d'échange de chaleur en amont et/ou en aval du moyen de pressurisation 4.

L'invention concerne la mise en place d'un deuxième étage de détournement de flux, tel que représenté en figure 4 et déjà partiellement décrit pour la figure 2.

Grâce à ce deuxième étage de flux séparé, traité et retourné, le débit de gaz traité par le moyen de pressurisation 4 est plus faible que dans le cas d'un seul étage, à condition de pouvoir appliquer une pression suffisante pour permettre le bon fonctionnement des moyens de mélange 6 et 23.

L'invention avec deux étages implique l'utilisation d'un moyen d'échange de chaleur 11 placé sur le circuit secondaire 16. Le fait de placer l'échangeur 11 en deuxième étage dans le cas d'un prélèvement de chaleur permet de profiter deux fois de l'effet de remélange des flux qui baisse la température des gaz. Ainsi, les équipements installés sur le circuit secondaire travaillent à moindre température que s'ils étaient installés sur la ligne principale de détournement de flux.

Une variante concerne aussi l'utilisation d'un troisième étage ou plus, agencés selon la même logique.

Selon une variante préférée, le débit qui est dérivé du flux principal depuis le premier point de dérivation 25 représente entre 5% et 50% du débit principal. Dans le cas d'un deuxième étage, le débit dérivé depuis le second point de dérivation 35 représente lui aussi de 5% à 50% du débit dérivé initial, soit entre 0.25% et 25% du débit principal.

Selon une variante encore plus préférée, le premier débit dérivé représente entre 10% et 40% du débit principal et le deuxième débit dérivé entre 10% et 40% du débit dérivé initial, soit entre 1% et 16% du débit principal.

L'invention concerne également un procédé de recirculation de gaz utilisant les dispositifs inventifs décrits ci-dessus.

## Revendications

1. Dispositif (1) de recirculation de gaz comprenant une canalisation principale (21, 23, 24, 25), dite de flux principal de gaz, comprenant un moyen de mélange (6, 23) délimitant la partie aval (24, 25) et la partie amont (21) de ladite canalisation de flux principal de gaz (21, 23, 24, 25), et un circuit de dérivation (3, 5), dit de flux dérivé, comprenant un moyen d'échange de chaleur (11), ledit moyen de mélange (6, 23) comprenant une première entrée reliée à la partie amont (21) de ladite canalisation de flux principal de gaz (21, 23, 24, 25), une deuxième entrée reliée à une extrémité du circuit de dérivation (3, 5) et une sortie reliée à la partie aval (24, 25) de ladite canalisation de flux principal de gaz (21, 23, 24, 25), l'autre extrémité dudit circuit de dérivation (3, 5) étant reliée à la partie aval (24, 25) de ladite canalisation de flux principal de gaz (21, 23, 24, 25) au niveau d'un point dit premier point de dérivation (25), ledit circuit de dérivation (3, 5, 16, 17) comprenant d'une part un circuit primaire (3, 5) relié à ladite canalisation de flux principal de gaz (21,23,24,25) au niveau dudit premier point de dérivation (25) et au niveau dudit moyen de mélange (6, 23), et d'autre part un circuit secondaire (16, 17) comprenant ledit moyen d'échange de chaleur (11) et dont une des extrémités, dite extrémité aval, est reliée audit circuit primaire (3, 5) via un second moyen de mélange (33), et dont l'autre extrémité, dite extrémité amont, est reliée audit circuit primaire (3, 5) en un second point de dérivation (35) placé en aval dudit second moyen de mélange (33) sur ledit circuit primaire, ledit circuit secondaire (16, 17) comprenant en outre un moyen de pressurisation (4) et un moyen d'épuration (10).

2. Dispositif (1) selon la revendication précédente dans lequel le moyen de mélange (6, 23) est un Venturi dont l'entrée principale (7) est reliée à la partie amont (21) de ladite canalisation de flux principal de gaz (21, 23, 24, 25) et dont l'aspiration (8) est reliée à l'extrémité aval du circuit de dérivation (3, 5).

3. Dispositif (1) selon la revendication précédente dans lequel le moyen de mélange (6, 23) est un Venturi dont l'entrée principale (7) est reliée à l'extrémité aval du circuit de dérivation (3, 5) et dont l'aspiration (8) est reliée à la partie amont (21) de ladite canalisation de flux principal de gaz (21, 23, 24, 25) .

4. Procédé pour la recirculation des gaz, qui consiste à introduire un gaz dans la partie amont (21) d'un dispositif (1) selon l'une des revendications 1 à 3 et de le recueillir dans sa partie aval (24,25).

## Patentansprüche

1. Vorrichtung (1) zur Gasrezirkulation, die eine Hauptkanalisation (21, 23, 24, 25), Gashauptfluss genannt, umfasst, die ein Mischmittel (6, 23) umfasst, das den stromabwärtigen Teil (24, 25) und den stromaufwärtigen Teil (21) der Gashauptflusskanalisation (21, 23, 24, 25) abgrenzt, und einen Umlenkkreislauf (3, 5), Umlenkfluss genannt, der ein Wärmeaustauschmittel (11) umfasst, wobei das Mischmittel (6, 23) einen ersten Eingang umfasst, der mit dem stromaufwärtigen Teil (21) der Gashauptflusskanalisation (21, 23, 24, 25) verbunden ist, einen zweiten Eingang, der mit einem Ende des Umlenkkreislaufs (3, 5) verbunden ist, und einen Ausgang, der mit dem stromabwärtigen Teil (24, 25) der Gashauptflusskanalisation (21, 23, 24, 25) verbunden ist, wobei das andere Ende des Umlenkkreislaufs (3, 5) mit dem stromabwärtigen Teil (24, 25) der Gashauptflusskanalisation (21, 23, 24, 25) in dem Bereich eines Punkts, der erster Umlenkpunkt (25) genannt wird, verbunden ist,
wobei der Umlenkkreislauf (3, 5, 16, 17) einerseits einen Primärkreislauf (3, 5) umfasst, der mit der Gashauptflusskanalisation (21, 23, 24, 25) in dem Bereich des ersten Umlenkpunkts (25) und in dem Bereich des Mischmittels (6, 23) verbunden ist, und andererseits einen Sekundärkreislauf (16, 17), der das Wärmeaustauschmittel (11) umfasst, und von dem eines der Enden, stromabwärtiges Ende genannt, mit dem Primärkreislauf (3, 5) über ein zweites Mischmittel (33) verbunden ist, und dessen anderes Ende, stromabwärtiges Ende genannt, mit dem Primärkreislauf (3, 5) an einem zweiten Umlenkpunkt (35), der stromabwärts des zweiten Mischmittels (33) auf dem Primärkreislauf platziert ist, verbunden ist, wobei der Sekundärkreislauf (16, 17) außerdem ein Druckbeaufschlagungsmittel (4) und ein Reinigungsmittel (10) umfasst.

2. Vorrichtung (1) nach dem vorstehenden Anspruch, wobei das Mischmittel (6, 23) ein Venturi ist, dessen Haupteingang (7) mit dem stromabwärtigen Teil (21) der Gashauptflusskanalisation (21, 23, 24, 25) verbunden ist, und dessen Ansaugung (8) mit dem stromabwärtigen Ende des Umlenkkreislaufs (3, 5) verbunden ist.

3. Vorrichtung (1) nach dem vorstehenden Anspruch, wobei das Mischmittel (6, 23) ein Venturi ist, dessen Haupteingang (7) mit dem stromabwärtigen Ende des Umlenkkreislaufs (3, 5) verbunden ist, und dessen Ansaugung (8) mit dem stromabwärtigen Teil (21) der Gashauptflusskanalisation (21, 23, 24, 25) verbunden ist.

4. Verfahren zur Rezirkulation der Gase, das darin besteht, ein Gas in den stromaufwärtigen Teil (21) einer Vorrichtung (1) nach einem der Ansprüche 1 bis 3 einzuführen und es in seinem stromabwärtigen Teil (24, 25) zu sammeln.

## Claims

1. Gas recirculation device (1) comprising a main pipe (21, 23, 24, 25), known as the main gas flow pipe, comprising a mixing means (6, 23) defining the downstream portion (24, 25) and the upstream portion (21) of said main gas flow pipe (21, 23, 24, 25), and a bypass circuit (3, 5), known as the diverted flow circuit, comprising a heat exchange means (11), said mixing means (6, 23) comprising a first inlet connected to the upstream portion (21) of said main gas flow pipe (21, 23, 24, 25), a second inlet connected to one end of the bypass circuit (3, 5), and an outlet connected to the downstream portion (24, 25) of said main gas flow pipe (21, 23, 24, 25), the other end of said bypass circuit (3, 5) being connected to the downstream portion (24, 25) of said main gas flow pipe (21, 23, 24, 25) at a point known as the first bypass point (25),
said bypass circuit (3, 5, 16, 17) comprising, on the one hand a primary circuit (3, 5) connected to said main gas flow pipe (21, 23, 24, 25) at said first bypass point (25) and at said mixing means (6, 23), and on the other hand a secondary circuit (16, 17) comprising said heat exchange means (11) and one of the ends whereof, known as the downstream end, is connected to said primary circuit (3, 5) via a second mixing means (33), and the other end whereof, known as the upstream end, is connected to said primary circuit (3, 5) at a second bypass point (35) placed downstream of said second mixing means (33) on said primary circuit, said secondary circuit (16, 17) further comprising a pressurising means (4) and a purifying means (10).

2. Device (1) according to the preceding claim, wherein the mixing means (6, 23) is a Venturi mixer, the main inlet (7) whereof is connected to the upstream portion (21) of said main gas flow pipe (21, 23, 24, 25) and the suction (8) whereof is connected to the downstream end of the bypass circuit (3, 5).

3. Device (1) according to the preceding claim, wherein the mixing means (6, 23) is a Venturi mixer, the main inlet (7) whereof is connected to the downstream end of the bypass circuit (3, 5) and the suction (8) whereof is connected to the upstream portion (21) of said main gas flow pipe (21, 23, 24, 25).

4. Method for recirculating gases, consisting of inserting a gas into the upstream portion (21) of a device (1) according to one of claims 1 to 3 and of collecting same in the downstream portion (24, 25) thereof.
